(19) Europäisches Patentamt
European Patent Office
Office européen des brevets

(11) **EP 3 333 765 A1**

(12) **DEMANDE DE BREVET EUROPEEN**

(43) Date de publication:
**13.06.2018 Bulletin 2018/24**

(51) Int Cl.:
*G06K 9/00* (2006.01)        *G06K 9/46* (2006.01)
*G06T 5/00* (2006.01)        *G06K 9/62* (2006.01)
*G06K 9/36* (2006.01)

(21) Numéro de dépôt: **17204956.1**

(22) Date de dépôt: **01.12.2017**

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**
Etats d'extension désignés:
**BA ME**
Etats de validation désignés:
**MA MD TN**

(30) Priorité: **07.12.2016 FR 1662080**

(71) Demandeur: **Idemia Identity & Security France
92130 Issy-les-Moulineaux (FR)**

(72) Inventeurs:
• LANNES, Sarah
 92130 Issy Les Moulineaux (FR)
• DESPIEGEL, Vincent
 92130 Issy Les Moulineaux (FR)
• LIFCHITZ, Yann Raphaël
 92130 Issy Les Moulineaux (FR)
• GENTRIC, Stephane
 92130 Issy Les Moulineaux (FR)

(74) Mandataire: **Nony
 11 rue Saint-Georges
 75009 Paris (FR)**

(54) **SYSTEME DE TRAITEMENT D'IMAGES**

(57)    Système (1) de traitement d'images (4) comportant un réseau de neurones principal (2), de préférence à convolution (CNN) et au moins un réseau de neurones de prétraitement (6), de préférence à convolution, en amont du réseau de neurone principal (2), pour réaliser avant traitement par le réseau neuronal principal (2) au moins une transformation paramétrique f, différentiable par rapport à ses paramètres, cette transformation étant appliquée à au moins une partie des pixels de l'image et étant de la forme $p' = f(v(p)).\Theta$ où p est un pixel traité de l'image d'origine ou d'une décomposition de cette image, p' le pixel de l'image transformée ou de sa décomposition, V(p) est un voisinage du pixel p, et $\Theta$ un vecteur de paramètres, le réseau de neurones de prétraitement (6) ayant au moins une partie de son apprentissage qui s'effectue simultanément à celui du réseau de neurones principal (2).

Fig. 1

**Description**

La présente invention concerne les systèmes de traitement d'images utilisant des réseaux de neurones, et plus particulièrement mais non exclusivement ceux destinés à la biométrie, notamment la reconnaissance de visages.

Il a été proposé d'utiliser pour la reconnaissance de visages ou autres objets des réseaux de neurones dits à convolution (CNN en anglais). L'article Deep Learning de Yann Le Cun et al, 436 NATURE VOL 521, 28 MAY 2015, comporte une introduction à ces réseaux de neurones.

Il est courant par ailleurs de chercher à réaliser un prétraitement d'une image de façon à corriger un défaut de l'image, tel qu'un manque de contraste par exemple, en apportant une correction du gamma ou du contraste local.

La reconnaissance biométrique des visages suppose une grande diversité de conditions d'éclairage et d'acquisition des images, rendant difficile le choix de la correction à apporter. De plus, l'amélioration des performances des réseaux de neurones à convolution étant liée à des couches cachées entièrement apprises, cela rend difficile la compréhension des traitements d'images qu'il serait utile d'appliquer en amont de tels réseaux.

Par conséquent, encouragé par le développement rapide de processeurs de plus en plus puissants, la tendance actuelle est d'accroître la puissance des réseaux de neurones convolutifs, et d'élargir leur apprentissage à des images diversement altérées de façon à améliorer les performances de ces réseaux indépendamment de tout prétraitement.

Cependant, bien que plus performants, ces systèmes ne sont pas complètement robustes à la présence d'artefacts et à la dégradation de la qualité d'image. De plus, l'augmentation de la puissance de calcul des ressources informatiques est une solution relativement coûteuse qui n'est pas toujours adaptée.

Les solutions existantes aux problèmes de qualité image, qui consistent ainsi soit à enrichir les bases d'apprentissages avec des exemples d'images problématiques, soit à effectuer le traitement d'images en amont, indépendamment du problème que l'on cherche à apprendre, ne donnent donc pas entière satisfaction.

Il demeure par conséquent un besoin pour perfectionner encore les chaînes biométriques fondées sur des réseaux de neurones convolutifs, notamment pour les rendre plus robustes aux bruits divers et améliorer ainsi les performances de reconnaissance vis-à-vis d'images de moindre qualité.

L'article Spatial Transformer Networks, Max Jaderberg, Karen Simonyan, Andrew Zisserman, Koray Kavukcuoglu, NIPS 2015 décrit un système de traitement agencé pour la reconnaissance de caractères, dans lequel un réseau neuronal convolutif de prétraitement est utilisé pour réaliser des transformations spatiales telles que des rotations et des mises à l'échelle. Les problématiques liées à la biométrie ne sont pas abordées dans cet article. Les transformations appliquées aux pixels le sont à l'image entière.

L'invention répond au besoin rappelé ci-dessus grâce, selon l'un de ses aspects, à un système de traitement d'images comportant un réseau de neurones principal, de préférence à convolution (CNN), et au moins un réseau de neurones de prétraitement, de préférence à convolution, en amont du réseau de neurone principal, pour réaliser avant traitement par le réseau neuronal principal au moins une transformation paramétrique, différentiable par rapport à ses paramètres, cette transformation étant appliquée à au moins une partie des pixels de l'image, le réseau de neurones de prétraitement ayant au moins une partie de son apprentissage qui s'effectue simultanément à celui du réseau de neurones principal.

La transformation f selon ce premier aspect de l'invention est de la forme

$$p' - f(V(p), \Theta)$$

où p est le pixel traité de l'image d'origine ou d'une décomposition de cette image, p' le pixel de l'image transformée ou de sa décomposition, V(p) est un voisinage du pixel p (au sens mathématique du terme), et $\Theta$ un ensemble de paramètres. Le voisinage V(p) n'englobe pas toute l'image.

Le réseau de prétraitement permet ainsi d'estimer une ou plusieurs cartes d'au moins un vecteur $\Theta$ de paramètres, avec $\Theta = \{ \Theta_1, \Theta_2, ..., \Theta_n \}$, en appliquant la transformation $f$.

Par « carte » (ou « map » en anglais) on désigne une matrice dont la résolution peut être ou non égale à celle de l'image.

Par décomposition de l'image, il faut comprendre une séparation de l'image en plusieurs composantes, par exemple via une transformation de Fourier en séparant la phase et le module.

La transformation appliquée à un pixel peut être indépendante de la transformation qui est appliquée aux autres pixels de l'image. Ainsi, la transformation effectuée par le réseau de prétraitement peut n'être appliquée qu'à une partie seulement des pixels de l'image.

La transformation appliquée est autre qu'une transformation spatiale appliquée à l'image entière comme dans l'article Spatial Transformer Networks ci-dessus, et par conséquent est autre qu'un recadrage, une translation, une rotation, une homothétie, une projection sur un plan ou une symétrie.

La transformation appliquée peut être spatialement invariante, c'est-à-dire qu'elle n'entraîne pas de déplacement des pixels sur l'image.

Le fait d'entrainer le réseau de prétraitement avec le réseau de neurones principal permet d'avoir une correction parfaitement adaptée au besoin de l'analyse des descripteurs tels que déterminés par le réseau neuronal principal entrainé.

Les performances du système de traitement d'images s'en trouvent améliorées tout en permettant, contrairement aux solutions connues fondées sur un enrichissement des données d'apprentissage, de préserver la capacité des couches profondes du réseau principal pour l'apprentissage des descripteurs, en évitant de la consacrer à la compensation de problèmes de qualité d'image.

Entre autres exemples, le réseau de neurones de prétraitement peut être configuré pour agir sur des artéfacts de compression d'image et/ou sur la netteté de l'image.

Le réseau neuronal peut encore être configuré pour appliquer une transformation colorimétrique aux images de départ.

Plus généralement, le prétraitement d'image qui est réalisé peut consister en un ou plusieurs des opérateurs de traitements d'images suivants :

- opérateurs de modification pixel à pixel (ou point à point). Il s'agit par exemple de la correction de couleur, de teinte, de gamma ou d'opérations de seuillage du bruit;
- opérateurs locaux, notamment ceux pour la gestion du flou local ou du contraste, un opérateur local s'appuyant sur un voisinage du pixel, c'est-à-dire plus qu'un pixel mais moins que toute l'image ; un opérateur local permet, à partir d'un voisinage d'un pixel d'entrée, d'obtenir un pixel de sortie ;
- opérateurs dans l'espace fréquentiel (après transformée de l'image), et
- plus généralement, toute opération sur une représentation multi-image déduite de l'image d'origine.

Le fait de faire intervenir un ou plusieurs opérateurs dans l'espace fréquentiel ouvre la voie à diverses possibilités de réduction de bruit analogique ou numérique, telles que réduction des artefacts de compression, amélioration de la netteté de l'image, du piqué ou du contraste.

Ces opérateurs permettent aussi divers filtrages tels que l'égalisation d'histogrammes, la correction de la dynamique de l'image, la suppression des motifs (par exemple de type filigrane numérique « watermarking » en anglais) ou la correction fréquentielle et le nettoyage de l'image par la mise en place d'un système de récupération de l'information pertinente dans une image.

Par exemple, le réseau de neurones de prétraitement comporte une ou plusieurs couches de convolution (CONV) et/ou une ou plusieurs couches entièrement connectée (FC).

Le système de traitement peut comporter un opérateur d'entrée permettant d'appliquer à des images de départ une transformation d'entrée pour générer à partir des images de départ, en amont du réseau de neurones de prétraitement, des données dans un espace différent de celui des images de départ, le réseau neuronal de prétraitement étant configuré pour agir sur ces données, le système comportant un opérateur de sortie agencé pour ramener par une transformation de sortie inverse de la transformation d'entrée, les données traitées par le réseau de neurones de prétraitement dans l'espace de traitement des images de départ et générer ainsi des images corrigées qui sont traitées par le réseau de neurones principal.

L'opérateur d'entrée est par exemple configuré pour appliquer une transformée par ondelettes et l'opérateur de sortie une transformée inverse.

Dans des exemples de mise en oeuvre de l'invention, le réseau de neurones de prétraitement est configuré pour générer un ensemble de vecteurs correspondant à une carte de basse résolution, le système comportant un opérateur configuré pour générer par interpolation, notamment bilinéaire, un ensemble de vecteurs correspondant à une carte de plus forte résolution, ayant de préférence la même résolution que les images de départ.

Le réseau de neurones principal et le réseau de neurones de prétraitement peuvent être entraînés pour effectuer une reconnaissance, classification ou détection, notamment de visages.

L'invention a encore pour objet, selon un autre de ses aspects, un procédé d'apprentissage des réseaux de neurones principal et de prétraitement d'un système selon l'invention, tel que défini plus haut, dans lequel au moins une partie de l'apprentissage du réseau de neurones de prétraitement s'effectue de façon simultanée à l'entraînement du réseau de neurones principal.

L'apprentissage peut notamment s'effectuer à l'aide d'une base d'images altérées, notamment bruitées. On peut imposer une contrainte sur la direction dans laquelle évolue l'apprentissage de façon à chercher à minimiser une fonction de coût représentative de la correction apportée par le réseau de neurones de prétraitement.

L'invention a encore pour objet, selon un autre de ses aspects, un procédé de traitement d'images, dans lequel les images sont traitées par un système selon l'invention, tel que défini plus haut.

L'invention a encore pour objet, selon un autre de ses aspects, un procédé d'identification biométrique, comportant l'étape consistant à générer avec le réseau de neurones principal d'un système selon l'invention, tel que défini ci-dessus, une information relative à l'identification d'un individu par le système.

L'invention a encore pour objet, indépendamment ou en combinaison avec ce qui précède, un système de traitement d'images comportant un réseau de neurones principal, de préférence à convolution (CNN), et au moins un réseau de neurones de prétraitement, de préférence à convolution, en amont du réseau de neurone principal, pour réaliser avant traitement par le réseau neuronal principal au moins une transformation paramétrique, différentiable par rapport à ses paramètres, cette transformation étant appliquée à au moins une partie des pixels de l'image et laissant les pixels spatialement invariants, le réseau de neurones de prétraitement ayant au moins une partie de son apprentissage qui s'effectue simultanément à celui du réseau de neurones principal.

L'invention pourra être mieux comprise à la lecture de la description qui va suivre, d'exemples de mise en oeuvre non limitatifs de l'invention, et à l'examen du dessin annexé, sur lequel :

- La figure 1 est un schéma en blocs d'un exemple de système de traitement selon l'invention,
- la figure 2 illustre un exemple de prétraitement d'image pour réaliser une correction gamma,
- la figure 3 illustre un traitement appliquant un changement d'espace en amont du réseau neuronal de prétraitement,
- la figure 4 illustre un exemple de structure de réseau de neurones de prétraitement colorimétrique de l'image, et
- la figure 5 représente une image avant et après prétraitement colorimétrique suite à l'apprentissage du réseau de prétraitement.

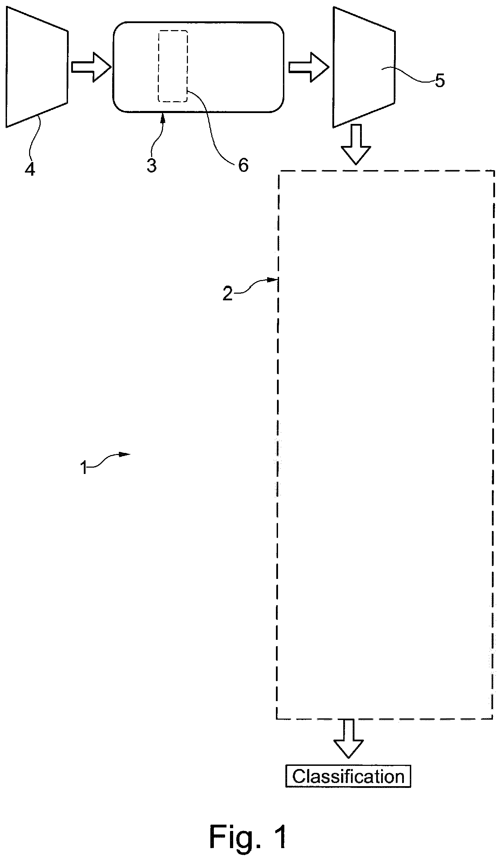

On a représenté à la figure 1 un exemple de système 1 de traitement d'images selon l'invention.

Ce système comporte dans l'exemple considéré un réseau neuronal convolutif biométrique 2 et un module de prétraitement d'images 3 qui comporte également un réseau neuronal 6, de préférence convolutif, et qui apprend à appliquer à l'image de départ 4 un traitement en amont du réseau biométrique 2.

Ce traitement réalisé en amont du réseau neuronal biométrique réside conformément à l'invention en au moins une transformation paramétrique différentiable par rapport à ses paramètres. Conformément à l'invention, le réseau de neurones de prétraitement 6 est entraîné avec le réseau de neurones biométrique 2. Ainsi, les paramètres de transformation de l'image du réseau de prétraitement 6 sont appris simultanément avec le réseau biométrique 2. La totalité de l'apprentissage du réseau de neurones de prétraitement 6 peut s'effectuer durant l'apprentissage du réseau de neurones 2. En variante, l'apprentissage du réseau 6 s'effectue dans un premier temps indépendamment du réseau 2 puis l'apprentissage est finalisé par un apprentissage simultané des réseaux 2 et 6, ce qui permet en quelque sorte de « synchroniser » les réseaux.

On utilise pour l'apprentissage des images dont on fait varier la qualité. De préférence, l'apprentissage s'effectue à l'aide d'une base d'images altérées, notamment bruitées et l'on peut imposer une contrainte sur la direction dans laquelle évolue l'apprentissage de façon à chercher à minimiser une fonction de coût représentative de la correction apportée par le réseau de neurones de prétraitement.

La ou les transformations effectuées par le réseau de prétraitement 6 étant différentiables, elles ne font pas obstacle au processus de rétro-propagation nécessaire à l'apprentissage de ces réseaux.

Le réseau neuronal de prétraitement peut être configuré pour réaliser une transformation non linéaire, notamment choisie parmi : correction gamma des pixels, correction de contraste local, correction de couleur, correction du gamma de l'image, modification du contraste local, réduction du bruit et/ou réduction des artefacts de compression.

Cette transformation peut s'écrire sous la forme :

$$p' = f(V(p), \Theta)$$

où p est le pixel de l'image d'origine ou d'une décomposition de cette image, p' le pixel de l'image transformée ou de sa décomposition, V(p) est un voisinage du pixel p et $\Theta$ un ensemble de paramètres.

Le réseau de neurones 2 peut être de tout type

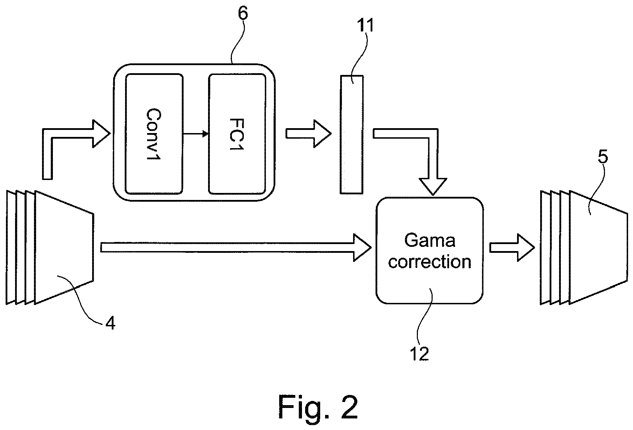

On va maintenant décrire en référence à la figure 2 un exemple de système de traitement d'images selon l'invention, dans lequel le module de prétraitement 3 applique une correction du gamma, c'est-à-dire de la courbe donnant la luminance des pixels du fichier de sortie en fonction de celle des pixels du fichier d'entrée.

Dans cet exemple, le réseau neuronal de prétraitement 6 a une unique sortie, à savoir le paramètre de correction gamma, qui est appliqué à l'image entière.

On apprend donc ici lors de l'apprentissage du système de traitement selon l'invention un unique paramètre de transformation de l'image.

Le réseau neuronal de prétraitement 6 comporte par exemple un module à convolution Conv1 et un module entièrement connecté FC1.

Le réseau 6 génère des vecteurs 11 qui permettent d'estimer un coefficient de correction du gamma, qui est appliquée à l'image en 12 pour la transformer, comme illustré à la figure 2.

Lors de l'apprentissage, le réseau de prétraitement 6 va apprendre à apporter en fonction des images de départ 4 une correction gamma pour laquelle le réseau biométrique 2 s'avère performant ; la correction apportée n'est pas forcément celle qu'intuitivement un opérateur humain apporterait à l'image pour en améliorer la qualité.

Il est possible de disposer successivement plusieurs réseaux de prétraitement qui apprendront les paramètres de transformation des images. Après chaque réseau de prétraitement, l'image est transformée selon les paramètres appris, et l'image résultante peut servir d'entrée au réseau suivant, jusqu'à être à l'entrée du réseau principal.

Les réseaux de prétraitement peuvent s'appliquer aux composantes résultantes d'une transformée de l'image, comme une transformée de Fourier ou une transformée en ondelettes. Ce sont alors les produits de ces transformées qui servent d'entrée aux sous-réseaux, avant que la transformée inverse ne soit appliquée pour rentrer dans le réseau principal.

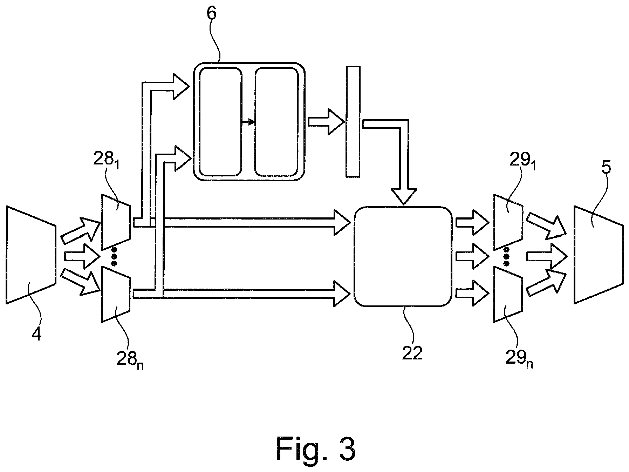

La figure 3 illustre le cas d'un système de traitement dans lequel le prétraitement par le réseau 6 s'effectue via une représentation multi-image déduite de l'image d'origine après une transformée. Cela permet de générer des sous-images de $28_1$ à $28_n$ qui sont transformées en sous-images corrigées $29_1$ à $29_n$, la transformation étant par exemple une transformée en ondelettes.

Une carte de coefficients de facteurs multiplicatifs et seuils est appliquée en 22 aux sous-images $28_1$ à $28_n$

Ce traitement est applicable à toute décomposition d'image pour laquelle l'étape de reconstruction est différentiable (par exemple transformée en cosinus, transformée de Fourier en séparant la phase et le module, représentation de l'image d'entrée comme la somme de plusieurs images, etc...).

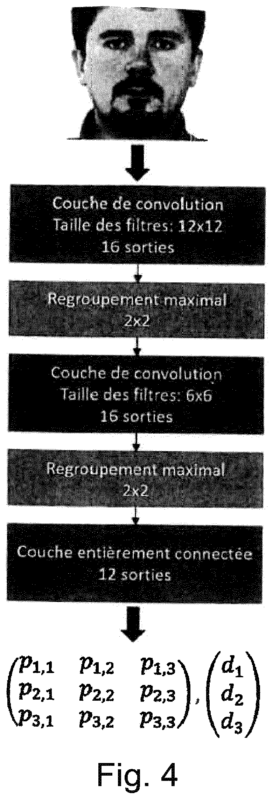

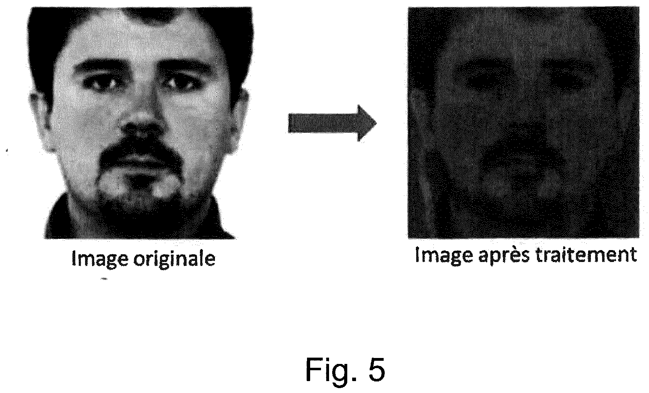

On va maintenant décrire en référence aux figures 4 et 5 un exemple de système de traitement adapté à la correction des couleurs dans l'image de départ, pour corriger les problèmes de teinte et utiliser une base de couleurs plus propice pour le reste de l'apprentissage.

Le vecteur de paramètres du réseau de prétraitement 6 correspond dans cet exemple à une matrice de passage 3x3 (P) et l'ajout d'un décalage constant (D) pour chaque canal de couleur R, V et B (transformation affine), soit 12 paramètres.

Un exemple de réseau 6 utilisable pour effectuer un tel traitement est représenté à la figure 4. Il comporte deux couches de convolution, deux couches de Maxpooling et une couche entièrement connectée.

Pour chaque pixel $\begin{pmatrix} r \\ g \\ b \end{pmatrix}$ de l'image initiale, on a :

$$\begin{pmatrix} r' & g' & b' \end{pmatrix} = \begin{pmatrix} r & g & b \end{pmatrix} * \begin{pmatrix} p_{1,1} & p_{1,2} & p_{1,3} \\ p_{2,1} & p_{2,2} & p_{2,3} \\ p_{3,1} & p_{3,2} & p_{3,3} \end{pmatrix} + \begin{pmatrix} d_1 & d_2 & d_3 \end{pmatrix}$$

Ce qui donne pour tous les pixels de l'image :

$$\begin{pmatrix} r_1' & g_1' & b_1' \\ \vdots & \vdots & \vdots \\ r_n' & g_n' & b_n' \end{pmatrix}$$
$$= \begin{pmatrix} r_1 & g_1 & b_1 \\ \vdots & \vdots & \vdots \\ r_n & g_n & b_n \end{pmatrix} * \begin{pmatrix} p_{1,1} & p_{1,2} & p_{1,3} \\ p_{2,1} & p_{2,2} & p_{2,3} \\ p_{3,1} & p_{3,2} & p_{3,3} \end{pmatrix} + \begin{pmatrix} d_1 & d_2 & d_3 \\ \vdots & \vdots & \vdots \\ d_1 & d_2 & d_3 \end{pmatrix}$$

Exemple

On applique le traitement de correction de couleur décrit en référence aux figures 4 et 5. La figure 5 donne un exemple de résultat. On constate que le résultat n'est celui que l'on attendrait intuitivement, car le réseau 6 a tendance à exagérer la saturation des couleurs, d'où l'intérêt d'un apprentissage combiné de l'ensemble des réseaux et non pas séparé.

Sur une base interne de visages ne présentant pas particulièrement de défaut chromatique, on observe une baisse relative des faux rejets de 3.21% pour un taux de fausse acceptance de 1%.

L'invention n'est pas limitée à des applications de classification d'images et s'applique également à l'identification et à l'authentification en biométrie faciale.

Le système de traitement selon l'invention peut encore s'appliquer à la détection, à des biométries autres que celle du visage, par exemple celle de l'iris, ainsi qu'à des applications de reconnaissance de piéton et de véhicule, de localisation et de synthèse d'images, et plus généralement toutes applications de détection, de classification ou d'analyse automatique d'images.

Ainsi, l'invention peut s'appliquer à la segmentation sémantique, au diagnostic médical automatique (sur mammographie ou échographie par exemple), à l'analyse de scènes (comme les véhicules sans conducteurs) ou à l'analyse sémantique de vidéos par exemple.

On peut encore ajouter au système de traitement un réseau neuronal convolutif de prétraitement appliquant une transformation spatiale aux pixels, comme décrit dans l'article Spatial Transformer mentionné dans l'introduction.

L'invention peut être mise en oeuvre sur tout type de matériel, par exemple ordinateur personnel, téléphone intelligent, carte dédiée, superordinateur.

On peut réaliser le traitement de plusieurs images en parallèle par des réseaux de prétraitement en parallèle.

## Revendications

1. Système (1) de traitement d'images (4) comportant un réseau de neurones principal (2), de préférence à convolution (CNN) et au moins un réseau de neurones de prétraitement (6), de préférence à convolution, en amont du réseau de neurone principal (2), pour réaliser avant traitement par le réseau neuronal principal (2) au moins une transformation paramétrique f, différentiable par rapport à ses paramètres, cette transformation étant appliquée à au moins une partie des pixels de l'image et étant de la forme $p' = f(V(p),\Theta)$ où p est un pixel traité de l'image d'origine ou d'une décomposition de cette image, p' le pixel de l'image transformée ou de sa décomposition, $V(p)$ est un voisinage du pixel p, et $\Theta$ un vecteur de paramètres, le réseau de neurones de prétraitement (6) ayant au moins une partie de son apprentissage qui s'effectue simultanément à celui du réseau de neurones principal (2).

2. Système selon la revendication 1, la transformation f laissant les pixels spatialement invariants sur l'image.

3. Système selon l'une des revendications précédentes, le réseau de prétraitement (6) étant agencé pour réaliser une modification de pixel à pixel, notamment effectuer une correction de couleur, de teinte, de gamma ou une opération de seuillage du bruit.

4. Système selon l'une des revendications précédentes, le réseau de prétraitement (6) étant configuré pour appliquer un opérateur local, notamment de gestion du flou local ou du contraste.

5. Système selon l'une des revendications précédentes, le réseau de prétraitement (6) étant configuré pour appliquer un opérateur dans l'espace fréquentiel après transformée de l'image, de préférence pour réduire un bruit analogique ou numérique, notamment effectuer une réduction d'artefacts de compression, une amélioration de la netteté de l'image, du piqué ou du contraste, ou réaliser un filtrage tel que l'égalisation d'histogrammes, la correction d'une dynamique de l'image, la suppression de motifs de type filigrane numérique, la correction fréquentielle et/ou le nettoyage de l'image.

6. Système selon l'une quelconque des revendications précédentes, le réseau neuronal de prétraitement (6) étant configuré pour réaliser une transformation non linéaire, notamment une correction gamma des pixels et/ou une correction de contraste local.

7. Système selon l'une quelconque des revendications précédentes, le réseau neuronal de prétraitement (6) étant configuré pour appliquer une transformation colorimétrique.

8. Système selon l'une quelconque des revendications précédentes, comportant un opérateur d'entrée permettant d'appliquer à des images de départ une transformation d'entrée pour générer à partir des images de départ, en amont du réseau de neurones de prétraitement (6), des données dans un espace différent de celui des images de départ, le réseau neuronal de prétraitement étant configuré pour agir sur ces données, le système comportant un opérateur de sortie agencé pour ramener, par une transformation de sortie inverse de la transformation d'entrée, les données traitées par le réseau de neurones de prétraitement dans l'espace de traitement des images de départ et générer ainsi des images corrigées qui sont traitées par le réseau de neurones principal.

**9.** Système selon la revendication 8, le réseau de neurones de prétraitement étant configuré pour agir sur des artéfacts de compression d'image et/ou sur la netteté de l'image.

**10.** Système selon l'une quelconque des revendications précédentes, le réseau de neurones de prétraitement (6) étant configuré pour générer un ensemble de vecteurs (9) correspondant à une carte (7) de basse résolution, le système comportant un opérateur configuré pour générer par interpolation, notamment bilinéaire, un ensemble de vecteurs correspondant à une carte (8) de plus forte résolution, ayant de préférence la même résolution que les images de départ.

**11.** Système selon l'une quelconque des revendications précédentes, le réseau de neurones principal et le réseau de neurones de prétraitement étant entraînés pour effectuer une classification, reconnaissance ou détection biométrique, notamment de visages.

**12.** Procédé d'apprentissage des réseaux de neurones principal (2) et de prétraitement (6) d'un système selon l'une quelconque des revendications précédentes, dans lequel au moins une partie de l'apprentissage du réseau de neurones de prétraitement s'effectue de façon simultanée à l'entraînement du réseau de neurones principal.

**13.** Procédé selon la revendication 12, dans lequel l'apprentissage s'effectue à l'aide d'une base d'images altérées, notamment bruitées et en imposant une contrainte sur la direction dans laquelle évolue l'apprentissage de façon à chercher à minimiser une fonction de coût représentative de la correction apportée par le réseau de neurones de prétraitement.

**14.** Procédé de traitement d'images, dans lequel les images sont traitées par un système selon l'une quelconque des revendications 1 à 11.

**15.** Procédé d'identification biométrique, comportant l'étape consistant à générer avec le réseau de neurones principal d'un système tel que défini dans l'une quelconque des revendications 1 à 11 une information relative à l'identification d'un individu par le système.

Fig. 1

Fig. 2

Fig. 3

Couche de convolution
Taille des filtres: 12x12
16 sorties

Regroupement maximal
2x2

Couche de convolution
Taille des filtres: 6x6
16 sorties

Regroupement maximal
2x2

Couche entièrement connectée
12 sorties

$$\begin{pmatrix} p_{1,1} & p_{1,2} & p_{1,3} \\ p_{2,1} & p_{2,2} & p_{2,3} \\ p_{3,1} & p_{3,2} & p_{3,3} \end{pmatrix}, \begin{pmatrix} d_1 \\ d_2 \\ d_3 \end{pmatrix}$$

Fig. 4

Image originale → Image après traitement

# Fig. 5

**EP 3 333 765 A1**

**RAPPORT DE RECHERCHE EUROPEENNE**

Numéro de la demande

EP 17 20 4956

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | SVOBODA PAVEL ET AL: "CNN for license plate motion deblurring", 2016 IEEE INTERNATIONAL CONFERENCE ON IMAGE PROCESSING (ICIP), IEEE, 25 septembre 2016 (2016-09-25), pages 3832-3836, XP033017267, DOI: 10.1109/ICIP.2016.7533077 | 1-4,6,7, 10-15 | INV. G06K9/00 G06K9/46 G06T5/00 G06K9/62 G06K9/36 |
| Y | * page 3832 - page 3833 * * section 5 * | 5,8,9 | |
| | ----- | | |
| X | PENG XI ET AL: "Learning face recognition from limited training data using deep neural networks", 2016 23RD INTERNATIONAL CONFERENCE ON PATTERN RECOGNITION (ICPR), IEEE, 4 décembre 2016 (2016-12-04), pages 1442-1447, XP033085791, DOI: 10.1109/ICPR.2016.7899840 * section III * * figure 1 * | 1,11-15 | |
| | ----- | | **DOMAINES TECHNIQUES RECHERCHES (IPC)** |
| Y | CHAKRABARTI AYAN: "A Neural Approach to Blind Motion Deblurring"; "III" In: "Computer Vision - ECCV 2016", 17 septembre 2016 (2016-09-17), SPRINGER INTERNATIONAL PUBLISHING, XP047355338, ISSN: 0302-9743 vol. 9907, pages 221-235, [extrait le 2016-09-17] * abrégé * * page 221 - page 229 * | 5,8,9 | G06K G06T |
| | ----- | | |
| | -/-- | | |

Le présent rapport a été établi pour toutes les revendications

| Lieu de la recherche | Date d'achèvement de la recherche | Examinateur |
|---|---|---|
| La Haye | 26 février 2018 | Bouganis, Alexandros |

page 1 de 2

EP 3 333 765 A1

| | Europäisches Patentamt European Patent Office Office européen des brevets | **RAPPORT DE RECHERCHE EUROPEENNE** | Numéro de la demande EP 17 20 4956 |

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | MICHAL HRADIS ET AL: "Convolutional Neural Networks for Direct Text Deblurring", PROCEDINGS OF THE BRITISH MACHINE VISION CONFERENCE 2015, 1 janvier 2015 (2015-01-01), pages 6.1-6.13, XP055406852, DOI: 10.5244/C.29.6 ISBN: 978-1-901725-53-7 * sections 1, 3, 5 * * page 9, ligne 2 - ligne 5 * ----- | 1-4 | |
| A | Max Jaderberg ET AL: "Spatial Transformer Networks", , 5 juin 2015 (2015-06-05), XP055406872, Extrait de l'Internet: URL:https://arxiv.org/pdf/1506.02025v1.pdf [extrait le 2017-09-15] * section 3 * ----- | 1-15 | |
| A | Jinshan Pan ET AL: "Deblurring Face Images with Exemplars"; "VII" In: "Computer Vision - ECCV 2014", 1 janvier 2014 (2014-01-01), Springer International Publishing, XP055407322, ISSN: 0302-9743 vol. 8695, pages 47-62, * abrégé * ----- | 11,15 | **DOMAINES TECHNIQUES RECHERCHES (IPC)** |

Le présent rapport a été établi pour toutes les revendications

| Lieu de la recherche | Date d'achèvement de la recherche | Examinateur |
|---|---|---|
| La Haye | 26 février 2018 | Bouganis, Alexandros |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

page 2 de 2

14

**RÉFÉRENCES CITÉES DANS LA DESCRIPTION**

**Littérature non-brevet citée dans la description**

- **YANN LE CUN et al.** *NATURE,* 28 Mai 2015, vol. 521, 436

- **MAX JADERBERG ; KAREN SIMONYAN ; ANDREW ZISSERMAN ; KORAY KAVUKCUOGLU.** *NIPS,* 2015